(19) Europäisches Patentamt
European Patent Office
Office européen des brevets

(11) EP 0 862 367 B1

(12) **EUROPEAN PATENT SPECIFICATION**

(45) Date of publication and mention of the grant of the patent:
**20.06.2001 Bulletin 2001/25**

(21) Application number: **96939022.8**

(22) Date of filing: **13.11.1996**

(51) Int Cl.[7]: **A01N 43/80**
// (A01N43/80, 33:22)

(86) International application number:
**PCT/EP96/04966**

(87) International publication number:
**WO 97/18709 (29.05.1997 Gazette 1997/23)**

(54) **NEW HERBICIDAL COMPOSITIONS CONTAINING 4-BENZOYLISOXAZOLES AND ACLONIFEN**

NEUE HERBIZIDE ZUSAMMENSETZUNGEN DIE 4-BENZOYLISOXAZOLE UND ACLONIFEN ENTHALTEN

NOUVELLES COMPOSITIONS HERBICIDES CONTENANT DES 4-BENZOYLISOXASOLES ET DE L'ACLONIFENE

(84) Designated Contracting States:
**AT BE CH DE DK ES FI FR GB GR IE IT LI LU NL PT SE**
Designated Extension States:
**SI**

(30) Priority: **20.11.1995 GB 9523724**

(43) Date of publication of application:
**09.09.1998 Bulletin 1998/37**

(73) Proprietor: **AVENTIS CROPSCIENCE S.A.**
**69009 Lyon (FR)**

(72) Inventors:
- **LEROUX, Bernard**
  **F-69380 Lozanne (FR)**
- **RONSSIN, Sylvie**
  **F-69005 Lyon (FR)**

(56) References cited:
**EP-A- 0 527 036**
**FR-A- 2 656 985**
**GB-A- 2 284 547**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 862 367 B1

## Description

This invention relates to a new method for controlling weeds and to the compositions used in this method.

Aclonifen (2-chloro-6-nitro-3-phenoxyaniline) is a known herbicide (see for example U.S. Patent No. 4,394,159) used pre-emergence to control grasses and broad-leaved weeds in a number of crops, including maize.

Herbicidal 4-benzoylisoxazoles are disclosed in the literature, see for example European Patent Publication Nos. 0418175, 0487357, 0527036 and 0560482. In particular, the compound 5-cyclopropyl-4-(2-methylsulphonyl-4-trifluoromethyl-benzoyl)isoxazole has been disclosed as having good pre-emergence control of grasses and broad-leaved weeds in maize (Vrabel et al., Proc. N. Cent. Weed Sci. Soc., 1994, 49).

As a result of research and experimentation it has now been discovered that the use of certain 4-benzoylisoxazole derivatives in combination with aclonifen add to its capabilities of controlling a wide spectrum of broad-leaf weeds, grasses and sedges.

In addition to this it has been found that the combined herbicidal activity of combinations of 4-benzoylisoxazole derivatives with aclonifen against certain species is greater than expected, i.e. the herbicidal activity of combinations of 4-benzoylisoxazole derivatives with aclonifen showed on unexpected degree of synergism, as defined either by P. M.L. Tammes, Netherlands Journal of Plant Pathology, 70 (1964), pp73-80 in a paper entitled "Isoboles, a graphic representation of synergism in pesticides"; or by Limpel, L.E., P.H. Schuldt and D. Lamont, 1962, 1. Proc. NEWCC 16, 48-53, using the formula:-

$$E = X + Y - \frac{X.Y}{100}$$

(also known as the Colby formula) where:

E = the expected percent inhibition of growth by a mixture of two herbicides A and B at defined doses.
X = the percent inhibition of growth by herbicide A at a defined dose.
Y = the percent inhibition of growth by herbicide B at a defined dose.

When the observed percentage of inhibition by the mixture is greater than the expected value E using the formula above the combination is synergistic.

The remarkable synergistic effect gives improved reliability of control of a number of weed species and allows for a reduction in the amount of active ingredients employed.

A high level of control of these weeds is desirable to prevent:-

1) yield loss, through competition and/or difficulties with harvest,
2) crop contamination leading to storage and cleaning difficulties, and
3) unacceptable weed seed return to the soil.

The present invention therefore provides a method for the control of weeds at a locus which comprises applying to the locus:

(a) a 4-benzoylisoxazole of formula (I):

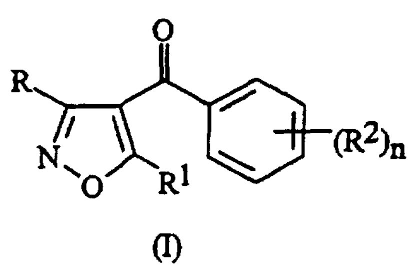

(I)

wherein

R is hydrogen or $-CO_2R^3$;
$R^1$ is cyclopropyl;
$R^2$ is selected from halogen, $-S(O)_pMe$ and $C_{1-6}$ alkyl or haloalkyl (e.g. trifluoromethyl);

n is two or three; p is zero, one or two; and
$R^3$ is $C_{1-4}$ alkyl; and

(b) 2-chloro-6-nitro-3-phenoxyaniline, which is aclonifen.

For this purpose, the 4-benzoylisoxazole herbicide and aclonifen are normally used in the form of herbicidal compositions (i.e. in association with compatible diluents or carriers and/or surface-active agents suitable for use in herbicidal compositions), for example as hereinafter described.

In formula (I) above, compounds in which n is three and the groups $(R^2)_n$ occupy the 2, 3 and 4-positions of the benzoyl ring; or in which n is two and the groups $(R^2)_n$ occupy the 2- and 4- positions of the benzoyl ring are preferred.

In formula (I) above, preferably one of the groups $R^2$ is $-S(O)_pMe$.

R is preferably hydrogen, methoxycarbonyl or ethoxycarbonyl (especially hydrogen). Compounds of formula (I) in which $(R^2)_n$ is 2-$SO_2$Me-4-$CF_3$ are also preferred.

The 4-benzoylisoxazole of formula (I) of particular interest in combination with aclonifen is 5-cyclopropyl-4-(2-methylsulphonyl-4-trifluoromethyl)benzoylisozaxole, hereafter referred to as compound A.

The amounts of the 4-benzoylisoxazole herbicide and aclonifen applied vary with the nature of the weeds, the compositions used, the time of application, the climatic and edaphic conditions and (when used to control the growth of weeds in crop-growing areas) the nature of the crops. When applied to a crop-growing area, the rate of application should be sufficient to control the growth of weeds without causing substantial permanent damage to the crop. In general, taking these factors into account, application rates from 1g to 500g of the 4-benzoylisoxazole and from 30g to 2500g of aclonifen per hectare give good results, more preferably from 10g to 200g of the 4-benzoylisoxazole and from 500g to 2500g of aclonifen per hectare. However, it is to be understood that higher or lower application rates may be used, depending upon the particular problem of weed control encountered.

The 4-benzoylisoxazole herbicide and aclonifen in combination may be used to control selectively the growth of weeds, for example to control the growth of those species hereinafter mentioned, by pre-emergence application in a directional or non-directional fashion e.g. by directional or non-directional spraying, to a locus of weed infestation which is an area used, or to be used, for growing crops, for example wheat, barley, oats, rye, maize and rice, soya beans, field and dwarf beans, peas, lucerne, cotton, peanuts, flax, onions, carrots, oilseed rape, sunflower, sugarcane, potatoes and permanent or sown grassland before or after sowing of the crop or before or after emergence of the crop.

By the term 'pre-emergence application' (pre-em) is meant application to the soil in which the weed seeds or seedlings are present before emergence of the weeds above the surface of the soil. By the term 'post-emergence application' (post-em) is meant application to the aerial or exposed portions of the weeds which have emerged above the surface of the soil. By the term 'early post-emergence application' (early post) is meant application to the aerial or exposed portions of the weeds which have emerged above the surface of the soil and are between the cotyledonous stage and the second to third leaf stage (or third and fourth whorl stage) of growth.

For the selective control of weeds at a locus of weed infestation which is an area used, or to be used, for the growing of various crops under various conditions the following application rates of the 4-benzoylisoxazole and aclonifen (referred to in the Table below as 'Isox' and 'Aclo' respectively) per hectare are particularly suitable:

| | | Dose Rate of active ingredient ( in g/ha) | | | | | |
|---|---|---|---|---|---|---|---|
| | | Preferred | | More Preferred | | Especially preferred | |
| Crop | Appln. | Isox | Aclo | Isox | Aclo | Isox | Aclo |
| Maize | Pre-em | 30 - 150 | 500-1000 | 30 - 100 | 500-1000 | 35 - 75 | ca 500 |
| Winter cereal | Early post or post-em | 25 - 200 | 500-1500 | 100 - 150 | 500-1500 | 100-150 | 500 - 1000 |
| Spring cereal | Pre-em, early post or post-em | 10 - 100 | 500-1500 | 10 - 50 | 500-1500 | ca 20 | 500 - 1500 |
| Potato | Pre-em | 10 - 100 | 1500-2500 | 20 - 50 | 1500-2500 | ca 20 | 1500 - 2000 |
| Sugar-cane | Pre-em | 35 - 200 | 500 - 1000 | 75 - 150 | 500-1500 | ca 75 | ca 500 |
| | Early post | 35 - 150 | 500 - 1000 | 50 - 100 | 500-1000 | ca 75 | ca 500 |
| | Post-em | 35 - 150 | 500 - 1000 | 50 - 100 | 500-1000 | ca 75 | ca 500 |

Due to selectivity properties of the combination, the use of the 4-benzoylisoxazole herbicide and aclonifen for the control of weeds in potatoes, maize or sugarcane is preferred, most preferably pre-emergence.

The mixtures of the present invention may also be used to control the growth of weeds at loci which are not crop-growing areas but in which the control of weeds is nevertheless desirable. Examples of such non-crop-growing areas include airfields, industrial sites, railways, roadside verges, the verges of rivers, irrigation and other waterways, scrublands and fallow or uncultivated land, in particular where it is desired to control the growth of weeds in order to reduce fire risks. When used for such purposes in which a total herbicidal effect is frequently desired, the active compounds are normally applied at dosage rates higher than those used in crop-growing areas as hereinbefore described. The precise dosage will depend upon the nature of the vegetation treated and the effect sought. In general, dose rates of from 150 g to 500 g per hectare of the 4-benzoylisoxazole herbicide and from 1500 to 2500 g per hectare of aclonifen are used.

The use of the mixture to control weeds in areas to be used for the growth of certain crops (e.g. potatoes), at the dose rates described above for the use in non-crop growing areas is also a feature of the invention.

The following non-limiting examples illustrate the invention.

## Example A1

The following experiments were conducted pre-emergence of the weed and crop species at a field research centre in France in May (soil type:- silt clay with 33% sand, 42% silt and 22% clay and a pH of 7.6). Compound A (formulated as a wettable powder) and aclonifen (formulated as a suspension concentrate) were dissolved in water and sprayed either alone or in mixture at various dose rates at a spray volume of 400 l/ha to 26.5 square metre field plots which had been sown 1 day earlier with the various plant seeds. Three replicates were performed and the percentage phytotoxicity was assessed 39 days after treatment (26 days for the crop species) expressed as a percentage damage in comparison with an untreated control. In the tables that follow the figures in brackets represent the expected value according to the Colby formula.

## RESULTS

**Table A1** **Panicum milliaceum**

Compound A / Aclonifen

| Dose (g/ha) | 0 | 500 | 1000 |
|---|---|---|---|
| 0 | - | - | 7.5 |
| 50 | 32.5 | 67.5 | 85.0(37.6) |
| 100 | 87.0 | 84.0 | 97.0(88.4) |
| 150 | 99.0 | 90.0 | 100(99.1) |

**Table A2** **Setaria viridis**

Compound A / Aclonifen

| Dose (g/ha) | 0 | 500 | 1000 |
|---|---|---|---|
| 0 | - | - | 10.0 |
| 50 | 57.5 | 85.0 | 89.5(61.8) |
| 100 | 87.0 | 90.0 | 95.0(84.3) |
| 150 | 97.0 | 97.5 | 100(97.3) |

**Table A3** **Maize (Zea Mays: variety: SABRINA)**

Compound A / Aclonifen

| Dose (g/ha) | 0 | 500 | 1000 |
|---|---|---|---|
| 0 | - | - | 0 |
| 50 | 0 | 0 | 0 |
| 100 | 0 | 0 | 0 |
| 150 | 0 | 1 | 0 |

**Example A2** (Glasshouse experiment)

Seed of the various species of broad-leaf or grass weeds were sown in unsterilised clay loam soil in 7 centimetre by 7 centimetre plastic plant pots. The pots were watered and allowed to drain. The soil surface was then sprayed with ranges of concentrations of either the individual herbicide or mixtures of two herbicides in various proportions, dissolved in a 50:50 by volume solution of acetone and water, using a track sprayer set to deliver the equivalent of 290 l/ha. All herbicides were used as unformulated technical materials.

Treated pots were placed at random in four replicate blocks per treatment for each plant species. The pots were held, in a glasshouse, standing on moist capillary matting, under lights and with overhead watering twice daily. Two weeks after treatment the percent reduction in plant growth, compared to an untreated control, was assessed.

Mean percent reduction in plant growth was calculated for each treatment. Dose/mean response was plotted on Log concentration/Probability graph paper, and lines fitted by eye. For herbicide mixtures a dose/response line for the first herbicide was drawn for each dose rate of the second herbicide and a dose/response line for the second

herbicide was drawn for each dose rate of the first herbicide. The doses representing a 90% reduction in plant growth (ED90's) were read from these lines and plotted on graphs whose axes were dose rates of the two herbicides. The line joining these points is an Isobole i.e. a line joining points (mixtures) of equal activity, as described by P.M.L. Tammes, Neth. J. Plant Path. 70 (1964) : 73-80. A line was also drawn joining the ED90 values of the individual components when applied alone. This line represents the theoretical isobole if the effect of the two components is additive i.e. there is no interaction between them. Isoboles falling below this line indicate synergy between the components while lines lying above it indicate antagonism.

In the tables that follow 'dose' represents the dose rate in grammes per hectare of the active ingredient used; and the figures for the weed control are percentages reduction in growth when compared with the untreated controls.

RESULTS:

**Table B1**

**Pre-emergence treatment of Digitaria sanguinalis with various mixtures of compound A and Aclonifen.**

| | | Aclonifen | | | | | | | |
|---|---|---|---|---|---|---|---|---|---|
| | Dose g/ha | 0 | 31.25 | 62.5 | 125 | 250 | 500 | 1000 | 2000 |
| | 0 | - | 12.5 | 7.5 | 21.25 | 90 | 92.5 | 99.5 | 99.5 |
| | 1 | 0 | 20 | 17.5 | 61 | 75 | 98.75 | 98.25 | 99.5 |
| | 2 | 7.5 | 22.5 | 41.25 | 50 | 81 | 98.5 | 99.5 | 99.75 |
| | 4 | 23.75 | 38.75 | 51.66 | 58.75 | 97.25 | 99.75 | 99.5 | 98.5 |
| | 8 | 25 | 35 | 61.25 | 85 | 98.75 | 99.75 | 99.75 | 100 |
| Cpd A | 16 | 80 | 87.5 | 83.5 | 92.5 | 92.5 | 99.75 | 99.75 | 100 |
| | 32 | 77.25 | 94.75 | 76 | 97.25 | 97.25 | 99.75 | 99.5 | 100 |
| | 64 | 79.25 | 82 | 97.25 | 98.5 | 99.5 | 99.75 | 99.75 | 99.75 |
| | 128 | 94.75 | 99.5 | 99.75 | 99.75 | 99.5 | 99.5 | 99.25 | 100 |
| | 256 | 100 | 99.25 | 73.5 | 99.75 | 99.75 | 99.75 | 99.75 | 100 |

**Table B2**

**Pre-emergence treatment of Setaria faberi with various mixtures of compound A and Aclonifen.**

| | | Aclonifen | | | | | | | |
|---|---|---|---|---|---|---|---|---|---|
| | Dose g/ha | 0 | 31.25 | 62.5 | 125 | 250 | 500 | 1000 | 2000 |
| Cpd A | 0 | - | 12.5 | 23.75 | 43.33 | 71.25 | 87.25 | 94.75 | 96.25 |
| | 1 | 2.5 | 18.75 | 17.5 | 38.75 | 72.5 | 88.75 | 96 | 97.25 |
| | 2 | 30 | 12.5 | 17.5 | 43.75 | 52.5 | 77.5 | 96 | 100 |
| | 4 | 11.25 | 15 | 30 | 52.5 | 58.75 | 88.75 | 96.25 | 93.75 |
| | 8 | 0 | 26.25 | 23.75 | 35 | 83.75 | 96.25 | 96 | 97.5 |
| | 16 | 47.5 | 40 | 23.75 | 47.5 | 82.5 | 95 | 98.75 | 99.75 |
| | 32 | 21.25 | 51.25 | 43.75 | 62.5 | 86.25 | 96 | 98.75 | 98.5 |
| | 64 | 65 | 86.25 | 47.5 | 93.75 | 78.75 | 98.5 | 97 | 98.25 |
| | 128 | 73.5 | 91.25 | 71.25 | 84.5 | 82.5 | 97 | 97.25 | 99.25 |
| | 256 | 97 | 93.5 | 87.25 | 87 | 96.75 | 99.25 | 99.75 | 99 |

**Table B3**

**Pre-emergence treatment of Setaria viridis with various mixtures of compound A and Aclonifen.**

| | | Aclonifen | | | | | | | |
|---|---|---|---|---|---|---|---|---|---|
| | Dose g/ha | 0 | 31.25 | 62.5 | 125 | 250 | 500 | 1000 | 2000 |
| Cpd A | 0 | - | 12.5 | 5 | 31.25 | 57.5 | 82.5 | 85 | 100 |
| | 1 | 23.75 | 12.5 | 5 | 25 | 92.5 | 97.5 | 99.75 | 97.5 |
| | 2 | 36.67 | 32.5 | 0 | 32.5 | 71.25 | 86.25 | 99.75 | 100 |
| | 4 | 43.75 | 20 | 13.75 | 48.75 | 71.25 | 91.25 | 98.75 | 99.5 |
| | 8 | 10 | 17.5 | 35 | 50 | 65 | 77.5 | 93.75 | 99.75 |
| | 16 | 72.5 | 45 | 61.25 | 61.25 | 92.5 | 96.25 | 97.5 | 100 |
| | 32 | 88.75 | 82.5 | 63.75 | 75 | 86.67 | 93.75 | 99.5 | 97.5 |
| | 64 | 75 | 81 | 77.5 | 98.75 | 99.5 | 96.25 | 96 | 99.75 |
| | 128 | 87.5 | 74.5 | 97.25 | 93.75 | 99.75 | 98.75 | 100 | 99.75 |
| | 256 | 95 | 97.5 | 99.5 | 98.75 | 100 | 99.75 | 100 | 100 |

## Brief Description of Drawings

Figure I is an ED90 plot calculated from observed values (-•-) and a corresponding plot of expected additive values for the mixtures of compound A with aclonifen against the weed species Digitaria sanguinalis.

Figure II is an ED90 plot calculated from observed values (-•-) and a corresponding plot of expected additive values for the mixtures of compound A with aclonifen against the weed species Setaria faberi.

Figure III is an ED90 plot calculated from observed values (-•-) and a corresponding plot of expected additive values for the mixtures of compound A with aclonifen against the weed species Setaria viridis.

The isoboles produced from the data in Tables B1, B2 and B3 shown in Figs. I to III hereafter, were clearly type III curves (Tammes, op. cit., Page 75, Fig 2), characteristic of synergism.

## Example A3

The following tests were carried out pre-emergence of the weed species at a research farm in Essex, England in a sand silt loam type soil. Compound A (formulated as a 75% wettable dispersible granule) and aclonifen (formulated

as a suspension concentrate) were dissolved in water and either sprayed alone or in a tank mix at various dose rates to plots of 10 square metre size which had been sown 2 days earlier with the various plant seeds. Three replicates were performed. The results were assessed 53 days after treatment by visual comparison of the percentage phytoxicity in comparison with an untreated control.

RESULTS

**Table C1** **Galium aparine**

| | Aclonifen | | |
|---|---|---|---|
| | **Dose (g/ha)** | **0** | **2100** |
| Compound A | 0 | - | 43 |
| | 10 | 0 | 97(43) |
| | 20 | 0 | 90(43) |
| | 30 | 0 | 77(43) |

**Table C2** **Solanum nigrum**

| | Aclonifen | | |
|---|---|---|---|
| | **Dose (g/ha)** | **0** | **2100** |
| Compound A | 0 | - | 7 |
| | 10 | 38 | 65(42) |
| | 20 | 95 | 97(95) |
| | 30 | 100 | 100(100) |

**Table C3** **Polygonum convolvulus**

| | Aclonifen | | |
|---|---|---|---|
| | **Dose (g/ha)** | **0** | **2100** |
| Compound A | 0 | - | 52 |
| | 10 | 17 | 97(60) |
| | 20 | 43 | 98(73) |
| | 30 | 25 | 75(64) |

**Example A4**

The following experiments were conducted pre-emergence of the crop, potatoes (Solanum tuberatum) at research centres in France, Spain and the United Kingdom in sandy loam soil during the normal growing season for potatoes. Compound A (formulated as a wettable powder and aclonifen (formulated as a suspension concentrate) were dissolved in water and sprayed either alone or in tank mixtures at various dose rates at a spray volume of 300 - 400 l/ha to 15 square metre plots which had been sown 2 days earlier with potatoes. Three replicates were performed and the percentage phytoxicity and efficacy was assessed 55, 56 or 64 days after treatment (in France, Spain and the United Kingdom respectively) in comparison with an untreated control.

**Results**

Table D1

| **Active Ingredient** | **Amount** (g/ha) | **Percentage phytotoxicity** | | |
|---|---|---|---|---|
| | | France | Spain | UK |
| Cpd A | 27 | 0 | 0 | 0 |
| Cpd A | 40 | 0 | 0 | 0 |
| Cpd A | 53 | 0 | 0 | 0 |
| Aclonifen | 2100 | 0 | 0 | 0 |
| Aclonifen | 4200 | 0 | 0 | 0 |
| Cpd A + Aclonifen | 27+2100 | 0 | 0 | 0 |
| Cpd A + Aclonifen | 30+4200 | 0 | 0 | 0 |
| Cpd A + Aclonifen | 53+2100 | 0 | 0 | 0 |
| Cpd A + Aclonifen | 80+4200 | 0 | 0 | 0 |

**Example A5**

The following test was conducted at a Brazilian research farm (soil content: clay 29%; silt 9.6%; sand 61%) using the same materials and procedure as describe in Example A4 above, except that in this case the herbicides were applied early post-emergence of the plants. The growth stages of the plants when the herbicides were applied were as follows: Panicum maximum (1-3 cm), Brachiaria plantaginea (0.5 -1cm), and sugar cane (5-10 cm). The sugarcane used was ratoon cane, and the percentage phytotoxicity was assessed at 14 and 56 days after treatment (DAT). The results were as follows (note that in the Table the figures in brackets represent the expected percentage phytotoxicity for the weed species according to the Colby formula). The experiment also included a standard mixture used for controlling weed found in sugarcane (hexazinone +diuron).

**Results**

Table E1

| Active ingredient | DOSE (g ai/ ha) | Sugarcane (14DAT) | Panicum maximum (14DAT) | Panicum maximum (56DAT) | Brachiaria plantaginea (14DAT) | Brachiaria plantaginea (56DAT) |
|---|---|---|---|---|---|---|
| Cpd A | 52 | 7 | 27 | 23 | 20 | 15 |
| Cpd A | 75 | 12 | 60 | 47 | 50 | 28 |
| Aclonifen | 1000 | 7 | 20 | 10 | 22 | 10 |
| Aclonifen | 1500 | 7 | 33 | 12 | 33 | 12 |
| Cpd A+ Aclonifen | 52+1000 | 14 | 93(42) | 92(31) | 92(38) | 92(23) |
| Cpd A+ Aclonifen | 52+1500 | 14 | 95(51) | 93 (32) | 93(46) | 93(25) |
| Cpd A+ Aclonifen | 75+1000 | 14 | 95(68) | 93(52) | 93(61) | 93(35) |
| Hexazinone + Diuron | 330+1170 | 8 | 85 | 53 | 93 | 92 |

According to a further feature of the present invention, there are provided herbicidal compositions comprising:

(a) a 4-benzoylisoxazole derivative of formula I as defined above; and
(b) aclonifen;

in association with, and preferably homogeneously dispersed in, one or more compatible herbicidally- acceptable diluents or carriers and/or surface-active agents (i.e. diluents or carriers or surface-active agents of the type generally acceptable in the art as being suitable for use in herbicidal compositions and which are compatible with aclonifen and 4-benzoylisoxazole derivatives). The term "homogeneously dispersed" is used to include compositions in which aclonifen and 4-benzoylisoxazole derivatives are dissolved in the other components. The term "herbicidal composition" is used in a broad sense to include not only compositions which are ready for use as herbicides but also concentrates which must be diluted before use.

The compositions preferably comprise (a) 4-benzoylisoxazole derivative and (b) aclonifen in proportions of from 1:2500 to 16.7:1, preferably from 1:250 to 1:2.5 wt/wt of (a):(b).

Preferably, the compositions contain from 0.05 to 90% by weight of aclonifen and 4-benzoylisoxazole derivative(s).

The herbicidal compositions may contain both a diluent or carrier and a surface-active (e.g. wetting, dispersing, or emulsifying) agent. Surface-active agents which may be present in herbicidal compositions of the present invention may be of the ionic or non-ionic types, for example sulphoricinoleates, products based on condensates of ethylene oxide with nonyl- or octyl-phenols, or carboxylic acid esters of anhydrosorbitols which have been rendered soluble by etherification of the free hydroxy groups by condensation with ethylene oxide, alkali and alkaline earth metal salts or sulphuric acid esters and sulphonic acids such as dinonyl- and dioctyl-sodium sulphono-succinates and alkali and alkaline earth metal salts of high molecular weight sulphonic acid derivatives such as sodium and calcium lignosulphonates. Examples of suitable solid diluents or carriers are aluminium silicate, talc, calcined magnesia, kieselguhr, tricalcium phosphate, powdered cork, absorbent carbon black and clays such as kaolin and bentonite. The solid compositions (which may take the form of dusts, granules or wettable powders) are preferably prepared by grinding aclonifen and the 4-benzoylisoxazole derivative with solid diluents or by impregnating the solid diluents or carriers with solutions of aclonifen and 4-benzoylisoxazole derivative in volatile solvents, evaporating the solvents and, if necessary, grinding the products so as to obtain powders. Granular formulations may be prepared by absorbing aclonifen and the 4-benzoylisoxazole derivative (dissolved in volatile solvents) onto the solid diluents or carriers in granular form and evaporating the solvents, or by granulating compositions in powder form obtained as described above. Solid herbicidal compositions, particularly wettable powders, may contain wetting or dispersing agents (for example of the types described above), which may also, when solid, serve as diluents or carriers.

Liquid compositions according to the invention may take the form of aqueous-organic solutions, suspensions and emulsions which may incorporate a surface-active agent. Suitable liquid diluents for incorporation in the liquid compositions include water, acetophenone, cyclohexanone, isophorone, toluene, xylene and mineral, animal and vegetable oils (and mixtures of these diluents). Surface-active agents, which may be present in the liquid compositions, may be ionic or non-ionic (for example of the types described above) and may, when liquid, also serve as diluents or carriers.

Wettable powders and liquid compositions in the form of concentrates may be diluted with water or other suitable diluents, for example mineral or vegetable oils, particularly in the case of liquid concentrates in which the diluent or carrier is an oil, to give compositions ready for use. When desired, liquid compositions of aclonifen and 4-benzoylisoxazole derivative may be used in the form of self-emulsifying concentrates containing the active substances dissolved in the emulsifying agents compatible with the active substances, the simple addition of water to such concentrates producing compositions ready for use.

Liquid concentrates in which the diluent or carrier is an oil may be used without further dilution using the electrostatic spray technique.

Herbicidal compositions according to the present invention may also contain, if desired, conventional adjuvants such as adhesives, protective colloids, thickeners, penetrating agents, stabilisers, sequestering agents, anticaking agents, colouring agents and corrosion inhibitors. These adjuvants may also serve as carriers or diluents.

Preferred herbicidal compositions according to the present invention are in the form of aqueous suspension concentrates; wettable powders; liquid water soluble concentrates; liquid emulsifiable suspension concentrates; granules or emulsifiable concentrates.

In addition the compositions may be provided in the form of a gel. This is particularly useful where the composition is intended for packaging in a water soluble bag, for example as described in European Patent Publication Nos. 0577702 and 0608340, and U.S Patent Nos. 5,222,595; 5224,601; 5,351,831; and 5,323,906.

The processes described in European Patent Publication Nos. 0418175, 0487357, 0527036 and 0560482 may be used to prepare the compounds of formula (I).

Herbicidal compositions according to the present invention may also comprise aclonifen and 4-benzoylisoxazole derivative in association with, and preferably homogeneously dispersed in, one or more other pesticidally active compounds and, if desired, one or more compatible pesticidally acceptable diluents or carriers, surface-active agents or conventional adjuvants as hereinbefore described. Preferred partners with the combination of the present invention include diflufenican, bromoxynil, atrazine, and isoproturon.

Pesticidally active compounds and other biologically active materials which may be included in, or used in conjunction with, the herbicidal compositions of the present invention, for example those hereinbefore mentioned, and which are acids, may, if desired, be utilised in the form of conventional derivatives, for example alkali metal and amine salts and esters.

The following non-limting Example illustrates compositions according to the invention. In the description that follows the following trademarks appear:- Moret, Soprophor, Antimousse, Rhodopol, Proxel.

**Example B1**

A suspension concentrate was prepared containing the following ingredients:

| | | | |
|---|---|---|---|
| Compound A: | 78g | Aclonifen | 510g |
| Propylene glycol | 50g | Moret D423 | 50g |
| Soprophor PB60 | 20g | Antimousse 432 | 5g |
| Citric acid | 1.5g | Rhodopol 23 | 2g |
| Proxel GXL | 1g | Water | 462.5g. |

Similar suspension concentrates may be prepared by replacing the isoxazole (Compound A) with other isoxazoles of formula (I).

According to a further feature of the present invention, there is provided a product comprising:

(a) a 4-benzoylisoxazole derivative of general formula I above; and
(b) aclonifen;

as a combined preparation for simultaneous, separate or sequential use, for example, in controlling the growth of weeds at a crop locus.

## Claims

**1.** A method for the control of weeds at a locus which comprises applying to the locus a herbicidally effective amount of:

(a) a 4-benzoylisoxazole of formula (I):

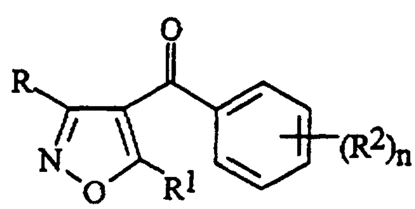

(I)

wherein

R is hydrogen or $-CO_2R^3$;
$R^1$ is cyclopropyl;
$R^2$ is selected from halogen, $-S(O)_pMe$ and $C_{1-6}$ alkyl or haloalkyl;
n is two or three; p is zero, one or two; and
$R^3$ is $C_{1-4}$ alkyl; and

(b) 2-chloro-6-nitro-3-phenoxyaniline, which is aclonifen.

**2.** The method according to claim 1 in which one of the groups $R^2$ is $-S(O)_pMe$, wherein p is as defined in claim 1.

**3.** The method according to claim 1 or 2 in which R is hydrogen, methoxycarbonyl or ethoxycarbonyl.

**4.** The method according to claim 1,2 or 3 in which $(R^2)_n$ is $2-SO_2Me-4-CF_3$.

**5.** The method according to any one of the preceding claims in which the 4-benzoylisoxazole of formula (I) is 5-cyclopropyl-4-(2-methylsulphonyl-4-trifluoromethyl)benzoylisozaxole.

**6.** The method according to any one of the preceding claims using from 1g to 500g per hectare of the 4-benzoylisoxazole and from 30g to 2500g of aclonifen per hectare.

**7.** The method according to any one of the preceding claims in which the locus is an area used, or to be used, for the growing of a crop.

**8.** The method according to claim 7 in which the crop is selected from maize, sugarcane and potatoes.

**9.** A herbicidal composition comprising:

(a) a 4-benzoylisoxazole derivative of formula I as defined in any one of claims 1 to 5; and
(b) 2-chloro-6-nitro-3-phenoxyaniline, which is aclonifen;

in association with one or more compatible herbicidally acceptable diluents or carriers or a surface-active agent.

**10.** A composition according to claim 9 in which the weight ratio of (a) : (b) is from 1:2500 to 16.7:1.

**11.** A composition according to claim 9 in which the weight ratio of (a) : (b) is from 1:250 to 1:2.5.

**12.** A product comprising:

(a) a 4-benzoylisoxazole derivative of general formula I as defiled in claim 1, 2 or 3; and
(b) 2-chloro-6-nitro-3-phenoxyaniline, which is aclonifen;

as a combined preparation for simultaneous, separate or sequential use in controlling the growth of weeds at a locus.

**Patentansprüche**

**1.** Verfahren zur Bekämpfung des Unkrautwachstums an einem Ort, das das Ausbringen einer herbizid wirksamen Menge der folgenden Verbindungen an diesem Ort umfaßt:

(a) ein 4-Benzoylisoxazol der Formel (I):

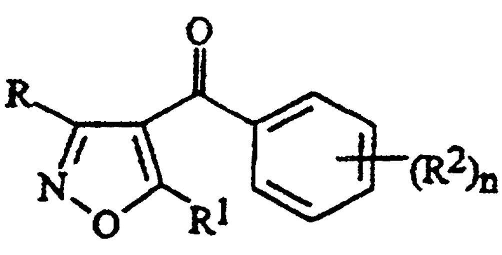

(I),

worin:

R Wasserstoff oder $-CO_2R^3$ bedeutet;
$R^1$ Cyclopropyl ist;
$R^2$ unter Halogen, $-S(O)_pMe$ und $C_{1-6}$-Alkyl oder Halogenalkyl ausgewählt ist;
n 2 oder 3 und p 0, 1 oder 2 bedeutet; und
$R^3$ $C_{1-4}$-Alkyl bedeutet; und

(b) 2- Chlor-6-nitro-3-phenoxyanilin, d.h. Aclonifen.

**2.** Verfahren nach Anspruch 1, wobei eine der Gruppen $R^2$ $-S(O)_pMe$ bedeutet, worin p die in Anspruch 1 angegebene Bedeutung aufweist.

**3.** Verfahren nach Anspruch 1 oder 2, wobei R Wasserstoff, Methoxycarbonyl oder Ethoxycarbonyl bedeutet.

**4.** Verfahren nach Anspruch 1, 2 oder 3, wobei $(R^2)_n$ 2-$SO_2$Me-4-$CF_3$ ist.

**5.** Verfahren nach einem der vorhergehenden Ansprüche, wobei das 4-Benzoylisoxazol der Formel (I) das 5-Cyclopropyl-4-(2-methylsulfonyl-4-trifluormethyl)-benzoylisoxazol ist.

**6.** Verfahren nach einem der vorhergehenden Ansprüche, wobei 1 bis 500 g/ha 4-Benzoylisoxazol und 30 bis 2500 g/ha Aclonifen verwendet werden.

**7.** Verfahren nach einem der vorhergehenden Ansprüche, wobei der Ort ein Gebiet ist, das für den Anbau von Feldfrüchten verwendet wird oder verwendet werden soll.

**8.** Verfahren nach Anspruch 7, wobei die Feldfrüchte unter Mais, Zuckerrohr und Kartoffel ausgewählt sind.

**9.** Herbizide Zusammensetzungen, die enthalten:

(a) ein 4-Benzoylisoxazolderivat der Formel (I) nach einem der Ansprüche 1 bis 5; und
(b) 2- Chlor-6-nitro-3-phenoxyanilin, d.h. Aclonifen,

in Kombination mit einem oder mehreren für herbizide Zusammensetzungen akzeptablen Verdünnungsmitteln oder Trägern oder grenzflächenaktiven Stoffen.

**10.** Zusammensetzung nach Anspruch 9, wobei das Gewichtsverhältnis von (a):(b) im Bereich von 1:2500 bis 16,7:1 liegt.

**11.** Zusammensetzung nach Anspruch 9, wobei das Gewichtsverhältnis von (a):(b) im Bereich von 1:250 bis 1:2,5 liegt.

**12.** Produkt mit

(a) einem 4-Benzoylisoxazolderivat der allgemeinen Formel (I) nach Anspruch 1, 2 oder 3; und
(b) 2- Chlor-6-nitro-3-phenoxyanilin, d.h. Aclonifen,

als Kombipräparat zur gleichzeitigen, getrennten oder zeitlich aufeinanderfolgenden Verwendung bei der Bekämpfung des Unkrautwachstums an einem Standort.

## Revendications

**1.** Méthode pour la lutte contre les mauvaises herbes en un lieu qui comprend l'application à ce lieu d'une quantité efficace du point de vue herbicide de :

(a) un 4-benzoylisoxazole de formule (I) :

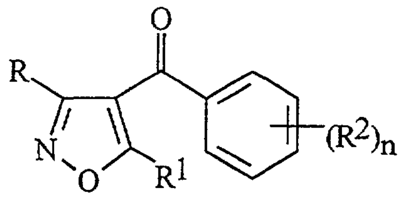

(I)

dans laquelle :

R représente l'atome d'hydrogène ou -$CO_2R^3$;
$R^1$ représente le radical cyclopropyle;
$R^2$ est choisi parmi un atome d'halogènes, -$S(O)_pMe$ et un radical alkyle ou haloalkyle en $C_{1-6}$;
n représente deux ou trois ; p représente zéro, un ou deux ; et
$R^3$ représente un radical alkyle en $C_{1-4}$; et

(b) la 2-chloro-6-nitro-3-phénoxyaniline, qui est l'aclonifen.

**2.** Méthode selon la revendication 1 dans laquelle un des radicaux $R^2$ représente -$S(O)_pMe$, dans lequel p est tel que défini dans la revendication 1.

**3.** Méthode selon la revendication 1 ou 2 dans laquelle R représente l'atome d'hydrogène, le radical méthoxycarbonyle ou éthoxycarbonyle.

**4.** Méthode selon la revendication 1, 2 ou 3 dans laquelle $(R^2)_n$ représente 2-$SO_2Me$-4-$CF_3$.

**5.** Méthode selon l'une quelconque des revendications précédentes dans laquelle le 4-benzoylisoxazole de formule (I) est le 5-cyclopropyl-4-(2-méthylsulfonyl-4-trifluorométhyl)benzoylisozaxole.

**6.** Méthode selon l'une quelconque des revendications précédentes dans laquelle on utilise de 1g à 500g par hectare de 4-benzoylisoxazole et de 30g à 2500g d'aclonifen par hectare.

**7.** Méthode selon l'une quelconque des revendications précédentes dans laquelle le lieu est une zone utilisée, ou devant être utilisée, pour la croissance d'une culture.

**8.** Méthode selon la revendication 7 dans laquelle la culture est choisie parmi le maïs, la canne à sucre et les pommes de terre.

**9.** Composition herbicide comprenant :

(a) un dérivé 4-benzoylisoxazole de formule (I) tel que défini dans l'une quelconque des revendications 1 à 5 ; et
(b) la 2-chloro-6-nitro-3-phénoxyaniline, qui est l'aclonifen ;

en association avec un ou plusieurs diluants ou supports ou agents tensioactifs compatibles et acceptables pour des usages herbicides.

**10.** Composition selon la revendication 9 dans laquelle le ratio en poids de (a):(b) est compris entre 1:2500 et 16,7:1.

**11.** Composition selon la revendication 9 dans laquelle le ratio en poids de (a):(b) est compris entre 1:250 et 1:2,5.

**12.** Produit comprenant :

(a) un dérivé 4-benzoylisoxazole de formule générale (I) tel que défini dans la revendication 1, 2 ou 3 ; et
(b) la 2-chloro-6-nitro-3-phénoxyaniline, qui est l'aclonifen ;

sous forme de préparation combinée pour utilisation simultanée, séparée ou séquentielle dans la lutte contre

la croissance des mauvaises herbes en un lieu.

FIG I

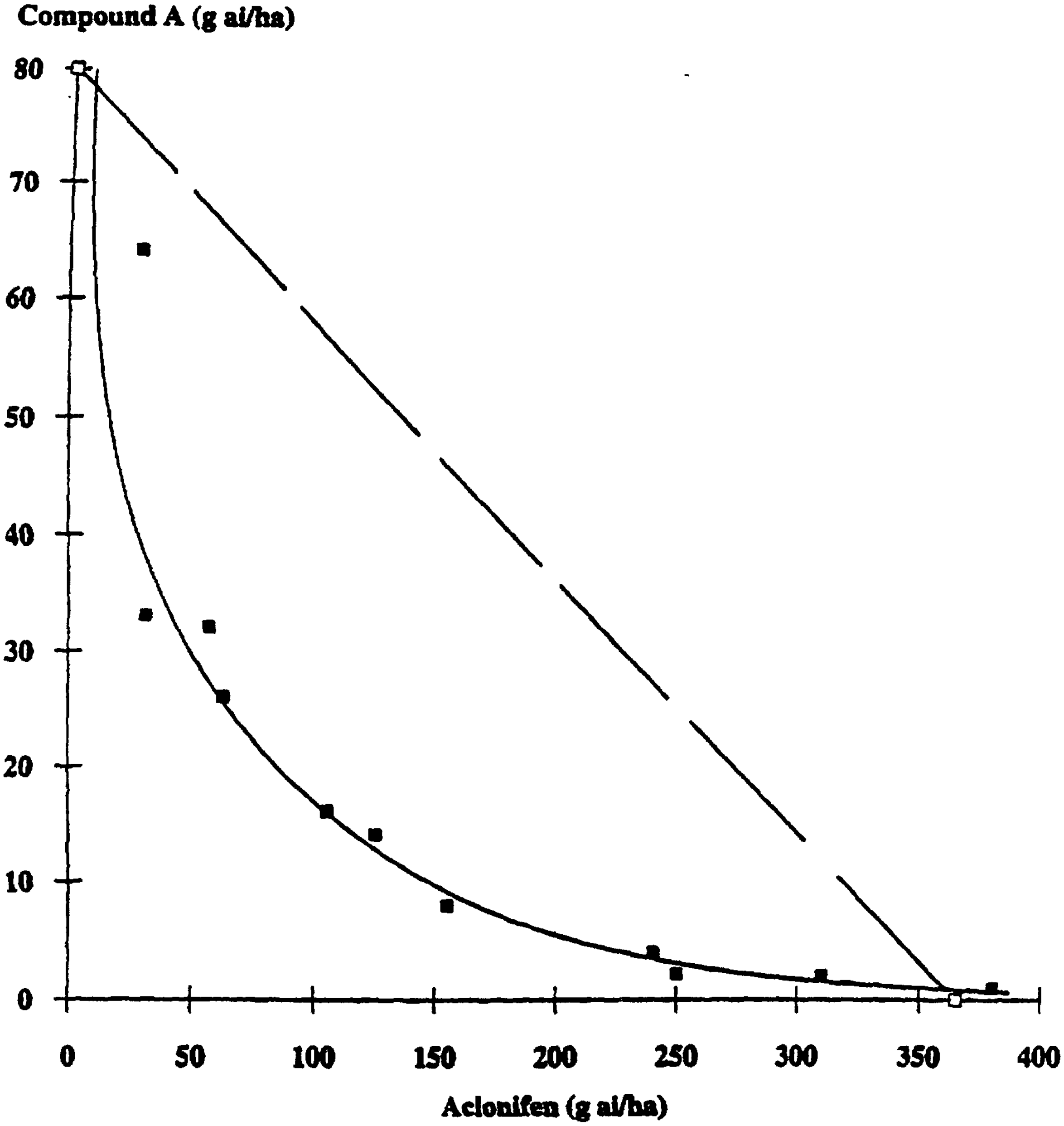
Compound A (g ai/ha)
80
70
60
50
40
30
20
10
0
0
50
100
150
200
250
300
350
400
Aclonifen (g ai/ha)

FIG II

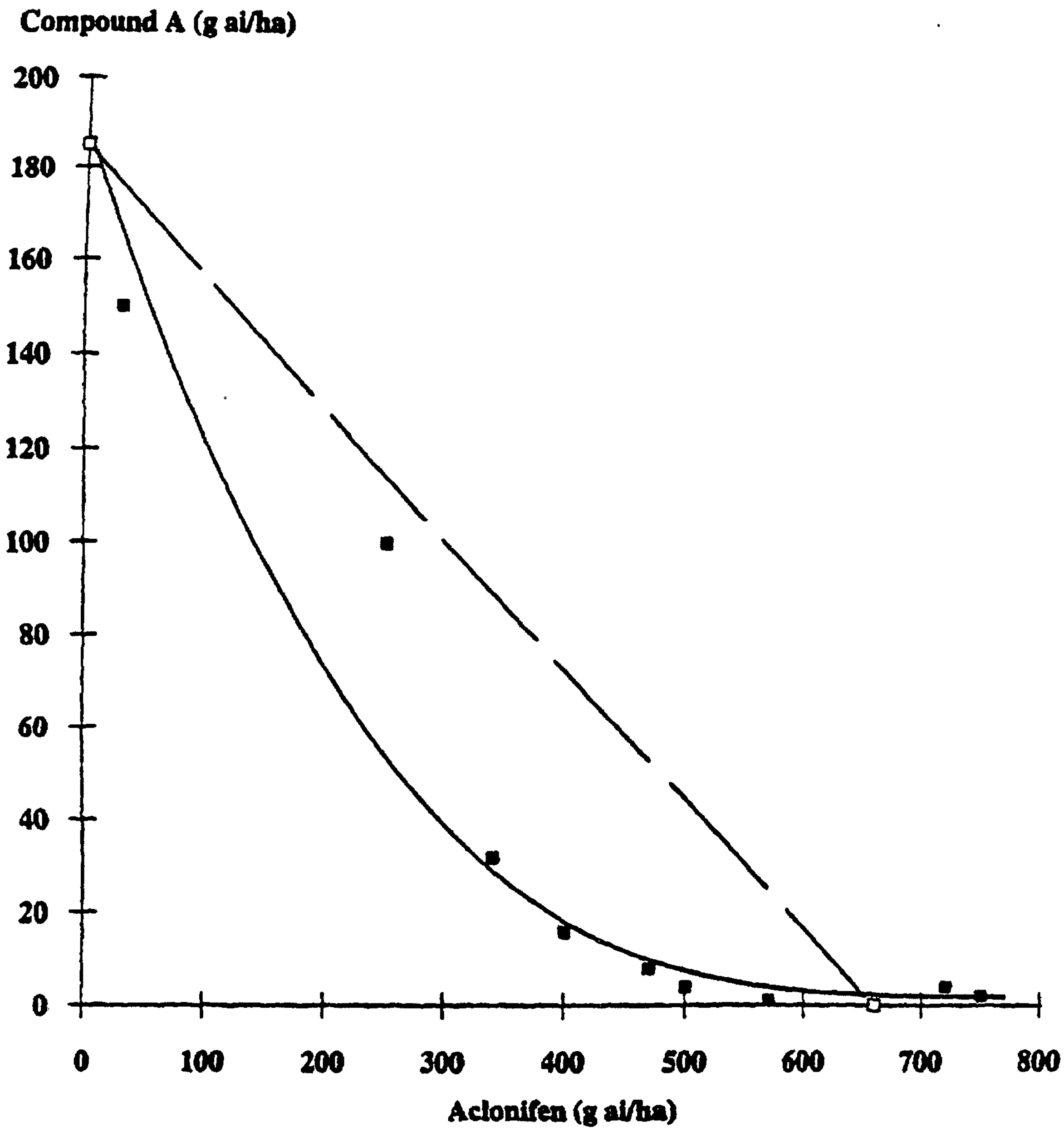
Compound A (g ai/ha)
200
180
160
140
120
100
80
60
40
20
0
0
100
200
300
400
500
600
700
800
Aclonifen (g ai/ha)

FIG III

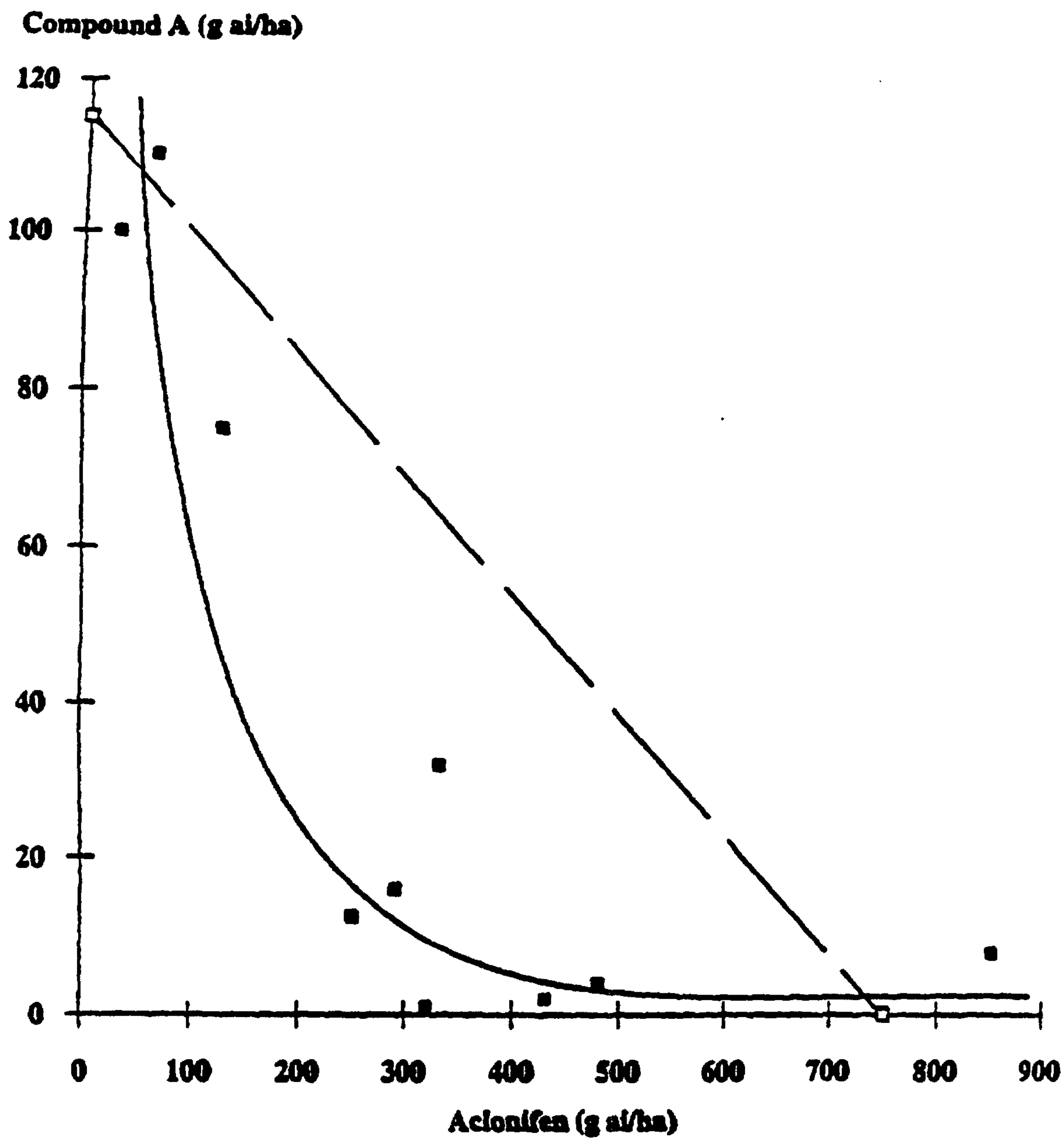
Compound A (g ai/ha)
120
100
80
60
40
20
0
0
100
200
300
400
500
600
700
800
900
Aclonifen (g ai/ha)